# EUROPEAN PATENT SPECIFICATION

(11) **EP 2 239 552 B1**
(45) Date of publication and mention of the grant of the patent: **19.09.2018**
(21) Application number: 08865745.7
(22) Date of filing: 24.12.2008
(51) Int. Cl.: G01M 11/02, G01N 21/958, G01N 21/95

(54) **IMAGE PICKING-UP DEVICE FOR LENS**
BILDAUFNAHMEVORRICHTUNG FÜR EINE LINSE
DISPOSITIF DE CAPTURE D'IMAGE POUR LENTILLE

(30) Priority: 26.12.2007 JP 2007334895
(43) Date of publication of application: 13.10.2010
(73) Proprietor: Hoya Corporation, Tokyo 161-8525 (JP); Genesia Corporation, Tokyo 181-0013 (JP)
(72) Inventor: TAKEYAMA, Norihide, Mitaka-City Tokyo 181-0013 (JP); TANAKA, Norihisa, Tokyo 161-8525 (JP)
(74) Representative: Betten & Resch
(86) International application number: PCT/JP2008/073398
(87) International publication number: WO 2009/081928

(56) References cited:
- EP-A1- 1 739 472
- WO-A1-2005/096074
- WO-A1-2005/098521
- CA-A1- 2 413 343
- JP-A- 8 005 571
- JP-A- 11 118 668
- JP-A- 2002 162 655
- JP-A- 2002 162 655
- JP-A- 2006 118 935
- JP-A- 2006 142 356
- JP-A- 2006 247 825
- JP-T- 2001 524 663
- JP-T- 2001 524 663
- JP-T- 2007 526 996
- JP-T- 2007 526 996

## Description

### Technical Field

The present invention relates to a lens image sensing apparatus used to detect, e.g., a hidden mark on a spectacle lens, a scratch on the lens surface, a foreign substance adhering on the lens, chipping or cracking of the lens, internal defects (striae, resin flow hysteresis, and weld lines) of the lens, and the optical characteristics of the lens.

### Background Art

A spectacle lens such as a progressive multifocal lens includes a plurality of convex (or concave) marks which are inscribed on it at reference positions spaced apart from the geometric center by predetermined distances and are called hidden marks (to be simply referred to as marks hereinafter). The spectacle lens is designed such that its geometric center, distance and near optical centers, and eyepoint position, for example, are calculated from the positions of these marks. For this reason, in edging the lens, an eyepoint position is detected from the positions of these marks, and a lens holder is mounted at the eyepoint position.

A spectacle lens image sensing apparatus disclosed in Japanese Patent Laid-Open No. 2002-022599 is known to be used to detect the marks inscribed on the spectacle lens.

The spectacle lens image sensing apparatus includes a light source, half mirror, and image sensing device placed on the side of the convex surface of a test lens, and a condenser lens, imaging lens, and reflective screen placed on the side of the concave surface of the test lens. The convex surface of the test lens is irradiated with light from the light source to project images of the marks formed on the convex surface onto the reflective screen. The images reflected by the reflective screen are returned to the side of the convex surface of the test lens, formed again on the light-receiving surface of the image sensing device via the half mirror, and processed by an image processing device, thereby calculating, e.g., the geometric center and eyepoint position of the test lens. The reflective screen is formed by attaching a reflecting sheet coated with a fine powder of, e.g., glass or aluminum to a rotary plate in order to reflect light.

The document EP 1 739 472 A1 relates to a jig mounting apparatus which has a detection optical system that detects reference marker of an eyeglass lens and which is configured so as to determine an mounting point based on the reference marker detected by the detection optical system and position the mounting center of jig, which is used in processing the eyeglass lens, on the mounting point to mount the jig on the surface of the eyeglass lens, in which the detection optical system includes: a focusing optical system that focuses a light-emitting optical flux from a light source on the surface of the eyeglass lens, where hidden marks are formed, via an aperture stop; a reflection plate that reflects an optical flux focused by the focusing optical system and passed through the eyeglass lens;; and an imaging device that is provided on a position optically approximately conjugate with the aperture stop and configured to focus on a space portion along an optical axis direction from the surface of the eyeglass lens.

The document CA 2 413 343 A1 refers to optical inspection and, particularly, to a method and apparatus for the automatic optical inspection of optical objects for cosmetic defects consisting of surface flaws and occlusions, which cause variations of their local optical properties.

The document JP 2002 162655 describes a laser beam emitted from a UV solid-state laser which is made incident on a biaxial double refracting crystal. The laser beam is formed to the beam shape of the ring band form by this biaxial double refracting crystal and is condensed to a semiconductor wafer by an objective lens.

The document JP 2001 524663 A describes a razing incidence interferometer which includes an extended light source for limiting spatial coherence of reference and test beams. A test plate is oriented at a grazing incidence to the test beam so that a first portion of the test beam is reflected from the front surface of the test plate, a second portion of the test beam is reflected from the back surface of the test plate, and the two test beam portions are sheared with respect to each other. The spatial coherence of the test beam is related to the lateral shear between the first and second test beam portions to significantly reduce contrast of an interference fringe pattern between the front and back surfaces of the test plate. Also, the reference beam is realigned with just one of the two test beam portions to favor the formation of an interference pattern between the reference surface and one of the front and back surfaces of the test plate over the formation of an interference pattern between the reference surface and the other of the front and back surfaces of the test plate.

Finally, the document JP 2007 526996 relates to a spectacle lens brand name marking test procedure uses a measurement light beam and illumination light beam from separate sources with a periodic, tilting, rotating or linearly moving reflector returning the beam to a camera synchronised to the reflector with contrast increase by image convolution.

### Disclosure of Invention

### Problem to be Solved by the Invention

Unfortunately, it is often the case that marks are formed on the spectacle lens using different types of marking techniques such as printing, so they are hard to distinguish from the remaining portions due to their variation in sharpness. In addition, in recent years, as marks are inscribed in lighter colors, and high index lenses and colored lenses prevail, the differences in luminance between light beams having passed through the marks and those having passed through portions where no marks are inscribed (to be also referred to as non-mark portions hereinafter) have remarkably reduced. For this reason, it is demanded to develop a high-reliability apparatus which can obtain a sharp image by attaining a contrast higher than that attained by the conventional apparatus.

Furthermore, assume that the test lens is made of, for example, a thick bulk material (e.g., a strong-minus-power spectacle lens). In this case, if marks are formed on the periphery of the lens, this generates shadows of the marks and therefore makes it difficult to detect them. For this reason, it is also demanded to develop an apparatus which can easily detect marks formed on such a bulk material as well.

The present invention has been made to solve the above-described conventional problems and meet the above-described demands, and has as its object to provide a high-reliability lens image sensing apparatus which can obtain a sharp image with large differences in luminance between light beams transmitted through marks on a lens and those transmitted through non-mark portions on the lens.

### Means of Solution to the Problem

**The invention is defined in independent claim 1.** In order to achieve the above-described object, a lens image sensing apparatus comprises a light source, an optical device including a collimator lens which converts light emitted by the light source into collimated light, and guides the collimated light to a convex surface of a test lens, a rotary reflector which reflects the light transmitted through the test lens back to the test lens, an image sensing device which receives the light that is reflected by the rotary reflector and transmitted through the test lens and the collimator lens again, an aperture stop arranged in an optical path between the collimator lens and the image sensing device, and a re-imaging lens provided between the aperture stop and the image sensing device, the rotary reflector including a sheet formed from a plurality of corner cube prisms, wherein the sheet is concavely curved when viewed from a side of said light source.

### Effects of the Invention

The corner cube prisms have three orthogonal total reflecting surfaces to have a retroreflection function and they reflect light emitted by the light source in the same direction as its incident direction. When a concave or convex mark is inscribed on the convex surface of the test lens, especially the periphery of this mark has a surface curvature different from that of the lens surface, so a light beam which enters this periphery diverges. Also, a light beam which enters the lens from a lens surface portion (non-mark portion) other than that where the mark is inscribed, is reflected by the corner cube prisms, and is transmitted through the periphery of the mark diverges on this periphery as well. Accordingly, light which is transmitted through the periphery of the mark, diverges, and returns in the same direction as its incident direction (such light will be referred to as diverging retroreflected light hereinafter) has a luminance lower than that of light which is transmitted through only the non-mark portion and retroreflected by the prisms (such light will be referred to as retroreflected light hereinafter). This means that a light beam converted into a collimated light beam by the collimator lens has a diameter significantly larger than that of a light beam converted into a collimated light beam by the collimator lens upon passing through only the non-mark portion. Hence, the illuminance on the light-receiving surface of the image sensing device becomes significantly lower in the mark portion than in the non-mark portion by setting the entrance pupil diameter of the re-imaging lens for forming an image of the test lens surface on the light-receiving surface of the image sensing device to be smaller than the diameter of a collimated light beam generated by the diverging retroreflected light and to be larger than the diameter of a collimated light beam generated by the retroreflected light. This makes it possible to sense a sharp image of the mark.

### Brief Description of Drawings

Fig. 1 is a schematic view showing an example of a lens image sensing apparatus not forming part of the invention;
Fig. 2 is a view showing the route of a light beam transmitted through only a non-mark portion on a test lens;
Fig. 3 is a view showing the route of a light beam transmitted through a mark;
Fig. 4A is a plan view showing the positional relationship among, e.g., marks on a progressive multifocal lens and its geometric center;
Fig. 4B is a sectional view taken along a line A - A in Fig. 4A;
Fig. 5 is a view for explaining mark detection;
Fig. 6 is a view for explaining another mark detection;
Fig. 7 is a view for explaining still another mark detection;
Fig. 8 is a view for explaining still another mark detection;
Fig. 9 is a view for explaining still another mark detection;
Fig. 10 is a view showing a mark image ; and
Fig. 11 is a sectional view showing a corner cube prism sheet according to the embodiment of the present invention.

### Best Mode for Carrying Out the Invention

The present invention will be described in detail below with reference to the accompanying drawings.

An example in which the test lens is a diverging progressive multifocal lens, and hidden marks (to be simply referred to as marks hereinafter) are formed on the convex surface of the lens will be given.

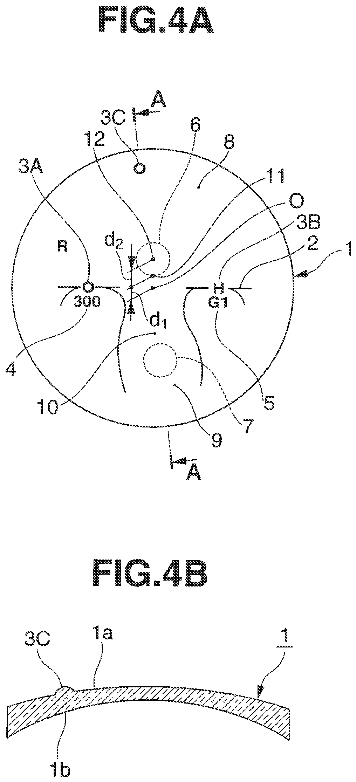

Referring to Figs. 4A and 4B, reference numeral 1 denotes a test lens serving as a plastic progressive multifocal lens with a circular shape (e.g., with a diameter of 80 mm), which has a polished, convex surface 1a. Reference numeral 2 denotes a horizontal reference line which passes through a geometric center O of the test lens 1; and 3A, 3B, and 3C, marks respectively formed on the convex surface 1a. The marks 3A, 3B, and 3C are formed of minute projections (e.g., with a height of about 2 to 4 µm). The two marks 3A and 3B are formed at two points spaced apart from the geometric center O to the left and right sides by an equal distance (e.g., 17 mm) on the horizontal reference line 2. The marks 3A and 3B are inscribed as identical small circles, or a small circle and a character. A number 4 indicating the addition power (the difference in front-side vertex power between a distance portion and a near portion) of the test lens 1, and an identification mark 5 indicating the type of lens are inscribed in the form of minute projections as well at positions below the marks 3A and 3B, respectively. The number 4 indicating the addition power is inscribed as a three-digit number (e.g., 300) at a position below the mark 3A positioned on the ear side when one wears the spectacle lens. Hence, whether the test lens 1 is a left-eye lens or a right-eye lens can be determined by checking whether the three-digit number is inscribed at a position below the left or right mark. Fig. 4 shows a right-eye lens having the left mark 3A inscribed as a small circle "o", and the mark 3B inscribed as an alphabet "H". The mark 3C is a spectacle shop identification mark, is formed in, for example, a round convex shape, and is inscribed on the convex surface 1a at a position near its outer periphery.

The test lens 1 serving as a progressive multifocal lens includes a distance power measuring portion 6, a near power measuring portion 7, a portion for distance vision (distance portion) 8, a portion for near vision (near portion) 9, and a portion whose dioptric power continuously changes (progressive portion) 10.

The positions of the distance power measuring portion 6, the near power measuring portion 7, and an eyepoint 11 of the test lens 1 change depending on the lens design, and are determined at predetermined reference positions spaced apart from the geometric center O. For example, the eyepoint 11 is at a position spaced apart from the geometric center O to the upper side by a predetermined distance d₁ (e.g., 2 mm), and a distance center 12 is at a position spaced apart from the position of the eyepoint 11 to the upper side by a predetermined distance d₂ (e.g., 4 mm). Hence, the positions of the geometric center O and eyepoint 11 can be obtained by capturing and processing images of the marks 3A and 3B to calculate their position coordinates.

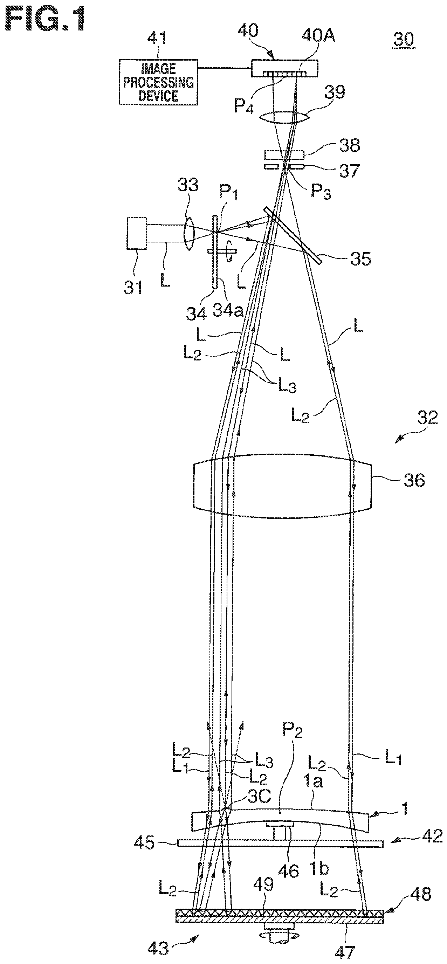

Referring to Fig. 1, a lens image sensing apparatus 30 includes a light source 31 placed on the side of the convex surface 1a of the test lens 1, and an optical device 32 which guides light beams L emitted by the light source 31 to the test lens 1.

The light source 31 is used to irradiate the test lens 1 to obtain sharp images of the marks 3A, 3B, and 3C, the number 4 indicating the addition power, and the identification mark 5, and is a monochromatic point source. The monochromatic point source is a general term including a laser light source that is a point source, and a light source, such as an LED, that can be substantially regarded to be a point source. Note that this exemplifies a red semiconductor laser as the point source.

The optical device 32 includes a condenser lens 33, transmission rotary scattering plate 34, half mirror 35, and collimator lens 36. The condenser lens 33 focuses the light beams L emitted by the light source 31. The transmission rotary scattering plate 34 is placed in front of the condenser lens 33. The half mirror 35 guides the light beams L transmitted through the transmission rotary scattering plate 34 toward the test lens 1. The collimator lens 36 is provided between the half mirror 35 and the test lens 1, and converts the light beams L from the light source 31 into collimated light beams L₁.

The transmission rotary scattering plate 34 is used to eliminate any speckles and fringes, and serves as a transparent scatterer made of, e.g., glass. The transmission rotary scattering plate 34 is configured to be rotated by a driving motor (not shown) at the time of measuring the marks on the test lens 1 so as to scatter the light beams L from the light source 31. For this reason, the transmission rotary scattering plate 34 has a coarse surface 34a facing the half mirror 35, and is placed at a focal position P₁ of the condenser lens 33.

The half mirror 35 has an appropriate transmittance and reflectance: it reflects the light beams L, which are emitted by the light source 31 and transmitted through the condenser lens 33 and transmission rotary scattering plate 34, toward the test lens 1, and transmits light beams L₂ and L₃ which return from the side of the test lens 1.

The collimator lens 36 is arranged in the optical path between the test lens 1 and the half mirror 35. The collimator lens 36 converts the light beams L, which are emitted by the light source 31, transmitted through the condenser lens 33 and transmission rotary scattering plate 34, and reflected by the half mirror 35, into the collimated light beams L₁.

The test lens 1 is placed at a focal position P₂ of the collimator lens 36 on its lower side.

An aperture stop 37, bandpass filter 38, re-imaging lens 39, image sensing device 40, and image processing device 41 are placed on the side of the half mirror 35 opposite to that of the test lens 1.

The aperture stop 37 is placed at a focal position P₃ of the collimator lens 36 on its upper side, and limits the diameter of the light beam coming from the collimator lens 36. More specifically, the aperture stop 37 has a diameter which is smaller than that of a light beam from the mark 3C on the convex surface 1a of the test lens 1, and is larger than that of a light beam from a non-mark portion. However, the position of the aperture stop 37 is not limited to the focal position P₃ of the collimator lens 36. The same function can also be realized by placing the aperture stop 37 at the position of the exit pupil of the collimator lens 36.

The bandpass filter 38 serves to transmit only light in the wavelength range of the light source 31 and cut off ambient light, and is provided between the aperture stop 37 and the re-imaging lens 39.

The re-imaging lens 39 focuses the light beams L₂ and L₃ having passed through the bandpass filter 38 on the image sensing device 40.

The image sensing device 40 includes a plurality of CCDs 40A which form a light-receiving surface, and is electrically connected to the image processing device 41. The CCDs 40A are placed at a focal position P₄ of the re-imaging lens 39. The focal position P₄ of the re-imaging lens 39 is conjugate to the position of the convex surface 1a of the test lens 1 on the side of the collimator lens 36.

The lens image sensing apparatus 30 also includes a lens holding device 42 and rotary reflector 43 placed on the side of a concave surface 1b of the test lens 1.

The lens holding device 42 serves to chuck and fix the center of the concave surface 1b of the test lens 1, and includes a transparent plate 45 and a lens chucking cylinder 46 standing upright at the center of the upper surface of the transparent plate 45. The lens holding device 42 is configured to chuck and fix the center of the concave surface 1b of the test lens 1 on the upper surface of the lens chucking cylinder 46 by evacuating the lens chucking cylinder 46 using a vacuum pump. The lens chucking cylinder 46 has an outer diameter (e.g., 8 mm) small enough not to hamper projection of the marks 3A, 3B, and 3C, the number 4 indicating the addition power, and the identification mark 5 on the test lens 1.

The rotary reflector 43 serves to retroreflect the light beams L₁. transmitted through the test lens 1 in the same directions as their incident directions, and includes a rotary plate 47 and a corner cube prism sheet 48 attached to the surface of the rotary plate 47.

The corner cube prism sheet 48 is made of plastic with a thickness of about 0.3 mm to 0.5 mm, includes a plurality of corner cube prisms (to be also simply referred to as prisms hereinafter) 49 formed on its surface, and is protected by a transparent protective film over the entire surface. The prisms 49 themselves are conventionally known prisms, which have three orthogonal total reflecting surfaces to have a function of reflecting the collimated light beams L₁ transmitted through the test lens 1 in the same directions as their incident directions, i.e., a retroreflection function. The rotary reflector 43 is configured to be rotated at high speed (e.g., at 3,400 rpm) by a driving motor (not shown) in order to uniform its surface brightness and background, like the transmission rotary scattering plate 34.

Although the light source 31 emits innumerable light beams L, Fig. 1 shows only three light beams L scattered by the transmission rotary scattering plate 34. These scattered light beams L are reflected by the half mirror 35, are converted into two collimated light beams L₁ and one collimated light beam L₂, irradiate the mark 3C and two non-mark portions on the test lens 1, are retroreflected by the prisms 49, and focus on the CCDs 40A of the image sensing device 40 as four light beams L₂ and L₃. However, light beams which irradiate other different portions on the test lens 1 and are transmitted through them similarly focus on the CCDs 40A and form images on them, as a matter of course.

Detection of the mark 3C on the test lens 1 by the lens image sensing apparatus 30 with the above-mentioned arrangement will be described next.

First, the test lens 1 is provided into the opening in the upper surface of the lens chucking cylinder 46 with the convex surface 1a facing up. Next, a vacuum exhaust device evacuates the lens chucking cylinder 46 to chuck and fix the test lens 1 in the opening in the upper surface of the lens chucking cylinder 46.

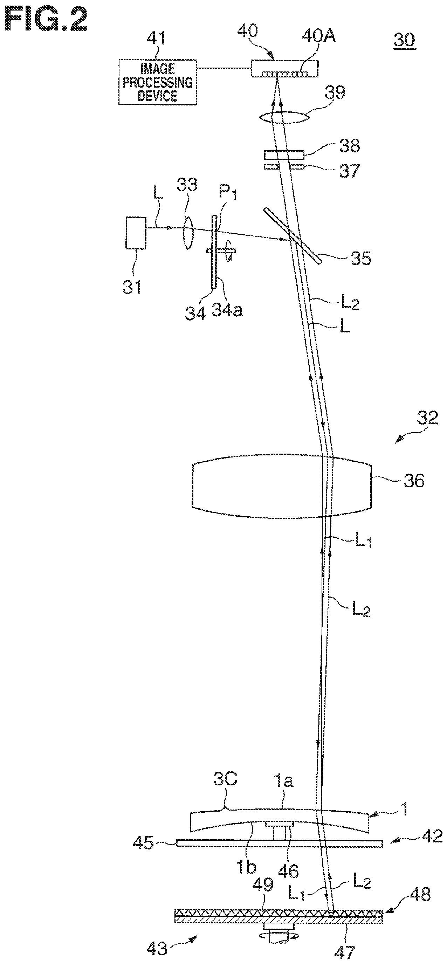

The light source 31 is turned on to emit light beams (red laser beams) L. The light beams L emitted by the light source 31 are focused by the condenser lens 33. The light beams L are converted into scattered light beams upon being transmitted through the transmission rotary scattering plate 34. The light beams L strike the half mirror 35, are reflected toward the test lens 1, and are further converted into collimated light beams L₁ upon being transmitted through the collimator lens 36. The collimated light beams L₁ become diverging light beams upon being transmitted through the test lens 1 from the convex surface 1a to the concave surface 1b (the collimated light beams L₁ become converging light beams when the test lens 1 is a convex converging dioptric lens). At this time, the collimated light beam L₁ which enters the test lens 1 from a lens surface portion (non-mark portion) other than that where the mark is inscribed strikes the prisms 49, is reflected by the prisms 49 in the same direction as its incident direction to the prisms 49. The light beam L₂ is transmitted through the test lens 1 from the concave surface 1b, and returns to the convex surface 1a, as shown in Fig. 2. A reflected light beam L₂ diffuses upon being transmitted through the test lens 1. Nevertheless, because the degree of diffusion of the light beam transmitted through the non-mark portion on the convex surface 1a is small enough to be ignored, the light beam L₂ becomes a retroreflected light beam with a sufficiently small diameter. Thus, the retroreflected light beam L₂ passes through the aperture stop 37 with little loss after being transmitted through the collimator lens 36 again. The retroreflected light beam L₂ having passed through the aperture stop 37 is transmitted through the bandpass filter 38 and re-imaging lens 39, and focused on the CCDs 40A of the image sensing device 40, thereby forming a bright image.

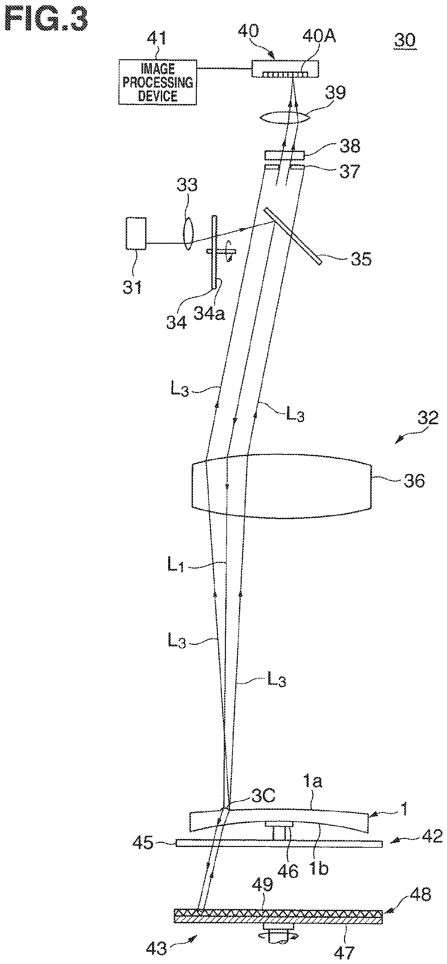

Referring to Fig. 3, the collimated light beam L₁ transmitted through the collimator lens 36 strikes and is retroreflected by the prisms 49 upon being transmitted through the test lens 1, and is transmitted through the test lens 1 again. At this time, the reflected light beam L₃ diffuses upon being transmitted through the mark 3C. The degree of diffusion of the reflected light beam L₃ is larger than the retroreflected light beam L₂ transmitted through the non-mark portion mentioned above. Thus, the light beam L₃ transmitted through the mark 3C becomes a diverging retroreflected light beam, returns in the same direction as its incident direction, is transmitted through the collimator lens 36, and passes through the aperture stop 37 with a considerable loss because its diameter is larger than that of the aperture stop 37. The diverging retroreflected light beam L₃ is focused on the CCDs 40A of the image sensing device 40 after being transmitted through the bandpass filter 38 and re-imaging lens 39. This makes it possible to sense a sharp image of the mark 3C because the illuminance of the mark 3C on the CCDs 40A is lower than the non-mark portion.

The image sensing device 40 converts the light received by the CCDs 40A into an electrical signal, and sends it to the image processing device 41. The image processing device 41 processes the image information from the image sensing device 40 to identify a spectacle shop as the delivery destination using the mark 3C. Also, the image sensing device 40 receives the pieces of image information of, e.g., the marks 3A and 3B to calculate the positions of, e.g., the geometric center O and eyepoint 11 based on the pieces of position information of these marks 3A and 3B.

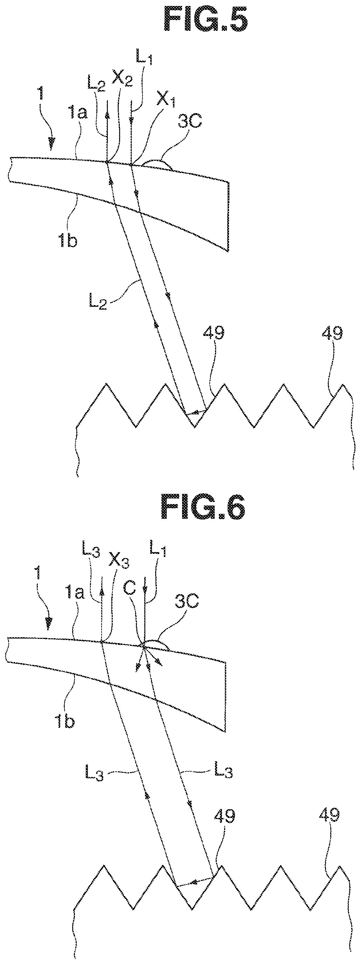

The detection of the mark 3C will be described in more detail herein with reference to Figs. 5 to 9.

Fig. 5 is a view showing the route of a light beam which is transmitted through only the non-mark portion and is not transmitted through the mark 3C. Assume that the test lens 1 is a minus-power lens and the prisms 49 have an appropriate size. In this case, the collimated light beam L₁ which enters the non-mark portion on the convex surface 1a of the test lens 1 on its periphery is transmitted through the test lens 1, becomes a diffused light beam, enters the corner cube prisms 49, and is totally reflected in the same direction as its incident direction by the prisms 49. The reflected light beam L₁ enters the concave surface 1b of the test lens 1, is transmitted through the test lens 1 again, and exits the non-mark portion on the convex surface 1a. An entrance point X₁ of the collimated light beam L₁ and an exit point X₂ of the light beam (retroreflected light beam) L₂ which is reflected by the prisms 49 and exits the convex surface 1a slightly shift from each other in the optical axis direction of the test lens 1. In this case, because the entrance point X₁ and exit point X₂ of the convex surface 1a have nearly the same surface curvature, the light beam L₂ which enters and is reflected by the prisms 49 becomes a retroreflected light beam parallel to the collimated light beam L₁, and travels back the way it came. The retroreflected light beam L₂ is transmitted through the collimator lens 36, half mirror 35, aperture stop 37, bandpass filter 38, and re-imaging lens 39 shown in Figs. 1 to 3, and is focused on the CCDs 40A of the image sensing device 40, thereby forming a bright image.

Fig. 6 is a view showing the route of a light beam transmitted through the mark 3C and the non-mark portion in this order. Because a periphery C of the mark 3C has a surface curvature quite different from that of the non-mark portion, the collimated light beam L₁ which enters and is transmitted through the periphery C becomes the light beam L₃, enters the prisms 49, and is totally reflected in the same direction as its incident direction by the prisms 49. The light beam L₃ is transmitted through the non-mark portion on the test lens 1, exits the non-mark portion from an exit point X₃, becomes a light beam parallel to the collimated light beam L₁, and travels back the way it came. Note that the light beam L₃ is diffused by the periphery C of the mark 3C and therefore becomes a diverging retroreflected light beam with a diameter larger than the retroreflected light beam L₂ which enters the non-mark portion and exits the non-mark portion, mentioned above. Thus, the diverging retroreflected light beam L₃ passes through the aperture stop 37 with a considerable loss, and has an illuminance on the CCDs 40A, that is lower than the non-mark portion, as described above.

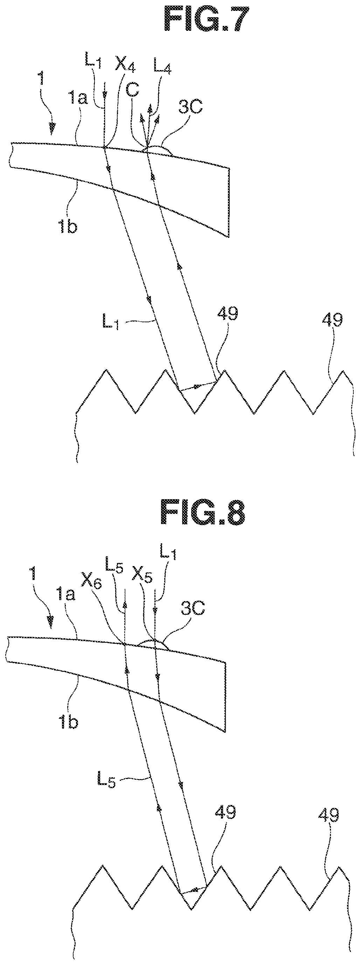

Fig. 7 is a view for explaining the route of a light beam transmitted through the non-mark portion and the periphery of the mark 3C in this order. The collimated light beam L₁ which enters the non-mark portion on the convex surface 1a from a point X₄ near the mark 3C, and is transmitted through the non-mark portion enters the prisms 49, is totally reflected in the same direction as its incident direction by the prisms 49, and exits the periphery C of the mark 3C. However, because the periphery C has a surface curvature quite different from that of the non-mark portion, the collimated light beam L₁ diffuses into a diverging retroreflected reflected light beam L₄ with a large diameter, and exits the convex surface 1a of the test lens 1. The diverging retroreflected reflected light beam L₄ passes through the aperture stop 37 with a considerable loss, and has an illuminance on the CCDs 40A, that is lower than the non-mark portion, as described above.

Fig. 8 is a view showing the route of a light beam which enters the central portion of the mark 3C, and exits the non-mark portion from a point near the mark 3C. The collimated light beam L₁ which enters a central portion X₅ of the mark 3C, and is transmitted through the test lens 1 enters the prisms 49, is totally reflected in the same direction as its incident direction by the prisms 49, is transmitted through the non-mark portion on the test lens 1, and exits the non-mark portion from an exit point X₆. Because the central portion of the periphery C has a surface curvature close to that of the non-mark portion, the degree of diffusion of the collimated light beam L₁ by the mark 3C is very small. Thus, the collimated light beam L₁ exits the convex surface 1a of the test lens 1 from the exit point X₆ as a retroreflected light beam L₅ with a small diameter. The retroreflected light beam L₅ is transmitted through the bandpass filter 38 and re-imaging lens 39, and focused on the CCDs 40A of the image sensing device 40 without any loss due to factors associated with the aperture stop 37, thereby forming a bright image, like the light beam L₂ shown in Figs. 2 and 5.

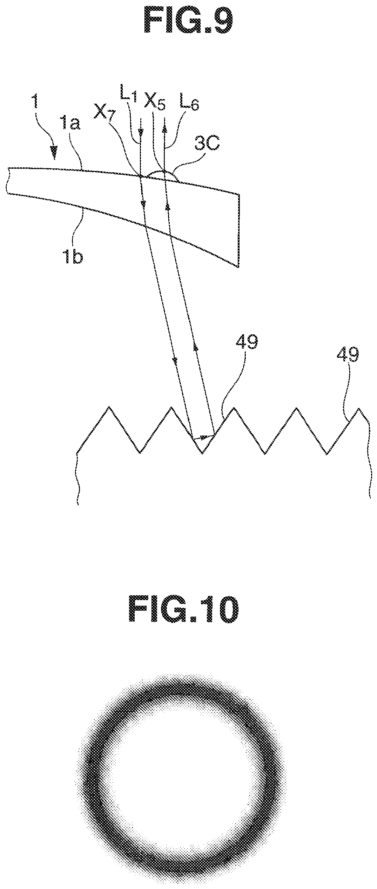

Fig. 9 is a view showing the route of a light beam which enters the non-mark portion from a point near the mark 3C, is transmitted through the non-mark portion, and exits the central portion of the mark 3C upon re-transmission. The collimated light beam L₁ which enters the non-mark portion on the test lens 1 from a point X₇ near the mark 3C, and is transmitted through the test lens 1 enters the prisms 49, and is totally reflected in the same direction as its incident direction by the prisms 49. A reflected light beam L₆ exits the central portion X₅ of the mark 3C. Because the central portion X₅ of the mark 3C has a surface curvature close to that of the non-mark portion on the convex surface 1a, as described above, the reflected light beam L₆ is transmitted through the central portion X₅ of the mark 3C with little diffusion, and exits the convex surface 1a of the test lens 1 from the central portion X₅ as a retroreflected light beam with a small diameter. Thus, the reflected light beam L₆ is transmitted through the bandpass filter 38 and re-imaging lens 39, and focused on the CCDs 40A without any loss due to factors associated with the aperture stop 37, thereby forming a bright image, like the retroreflected light beams L₂ and L₅.

That is, in the lens image sensing apparatus 30, using the corner cube prisms 49, the light beams L₂, L₅, and L₆ transmitted through only the non-mark portion on the convex surface 1a in both the forward and backward paths are returned as retroreflected light beams with small degrees of diffusion, and focused on the light-receiving surface of the CCDs 40A. Using the corner cube prisms 49 as well, the light beams L₃ and L₄ transmitted through the periphery C of the mark 3C in at least one of the forward and backward paths are returned as diverging retroreflected light beams with large degrees of diffusion, and focused on the light-receiving surface of the CCDs 40A. When the retroreflected light beams L₂, L₅, and L₆ and the diverging retroreflected light beams L₃ and L₄ are guided to the aperture stop 37, the retroreflected light beams L₂, L₅, and L₆ pass through the aperture stop 37 without any losses because they have sufficiently small diameters. Hence, the retroreflected light beams L₂, L₅, and L₆ can generate high illuminances of the mark on the light-receiving surface of the CCDs 40A. In contrast to this, the diverging retroreflected light beams L₃ and L₄ have diameters larger than that of the aperture stop 37, so they generate low illuminances of the mark on the light-receiving surface of the CCDs 40A because their losses due to factors associated with the aperture stop 37 are large. As a result, the lens image sensing apparatus 30 can obtain a mark image which is sharper and has a higher contrast than that obtained using the above-mentioned conventional reflective screen. This makes it possible to facilitate image processing, and, in turn, facilitate design of an image processing circuit.

Fig. 10 is a view showing an image of the mark 3C obtained by the apparatus. As shown in Fig. 10, an image of the mark 3C formed on the CCDs 40A of the image sensing device 40 has a dark periphery, a bright central portion, and a clear contour shape, and these features facilitate image processing by the image processing device 41.

Since the transmission rotary scattering plate 34 is used, generation of any speckles due to factors associated with the laser light source can be suppressed and prevented. Also, since the brightness of the surface of the corner cube prism sheet 48 in the image background is equalized by the rotary reflector 43, image processing can further be facilitated.

Even when the test lens 1 is a colored lens, it is possible to obtain a sharp image with high contrast as long as the mark has a shape which can obtain retroreflected light and diverging retroreflected light.

Since the CCDs 40A of the image sensing device 40 are sufficiently set smaller than the test lens 1, the ratio between the focal length (f₁) of the collimator lens 36 and the focal length (f₂) of the re-imaging lens 39 (their lateral magnification) becomes sufficiently high. This makes it possible to set the longitudinal magnification sufficiently high as well, thus increasing the depth of focus. This has the advantage of minimizing defocusing at the time of observing a thick lens, thus reducing the shadows of the end face of a minus-power lens.

The light beams L emitted by the light source 31 are converted into the collimated light beams L₁ by the collimator lens 36. However, if the light beams L are not converted into the collimated light beams L₁, the exit light from the collimator lens 36 obliquely enters the end face of the test lens 1. Therefore, this incident light strikes and is reflected by the edge surface, does not become effective retroreflected light even when it is reflected by the prisms 49, and is not focused on the CCDs 40A of the image sensing device 40. This makes it impossible to obtain a sharp image. In contrast to this, if the light beams L are converted into the collimated light beams L₁, the exit light from the collimator lens 36 enters the end face of a minus-power lens at a large incident angle. Therefore, this incident light is refracted toward the lens center without striking the edge surface, becomes retroreflected light upon being reflected by the prisms 49 after its transmission through the lens, travels back the way it came, and is focused on the CCDs 40A. This makes it possible to obtain a sharp image. When a conjugate optical system including the collimator lens 36 and re-imaging lens 39 is designed as a bilateral telecentric optical system, this is preferable because an image with the same barycentric position as an image free from defocusing can be obtained even if defocusing occurs upon fluctuation in thickness of the test lens 1.

Although image detection of the convex mark 3C has been described, it is not limited to a convex mark, and a sharp image can also be obtained in the same way even by using a concave mark. That is, because a concave mark is symmetrical to a convex mark and has, on the periphery of its concave portion, a surface curvature quite different from that of the convex surface 1a of the test lens 1, light transmitted through the periphery has a large degree of diffusion and therefore becomes diverging retroreflected light, whereas light transmitted through the central portion of the concave portion has a small degree of diffusion and therefore becomes retroreflected light. This makes it possible to obtain a mark image with a clear contour shape and high contrast between the retroreflected light and the diverging retroreflected light.

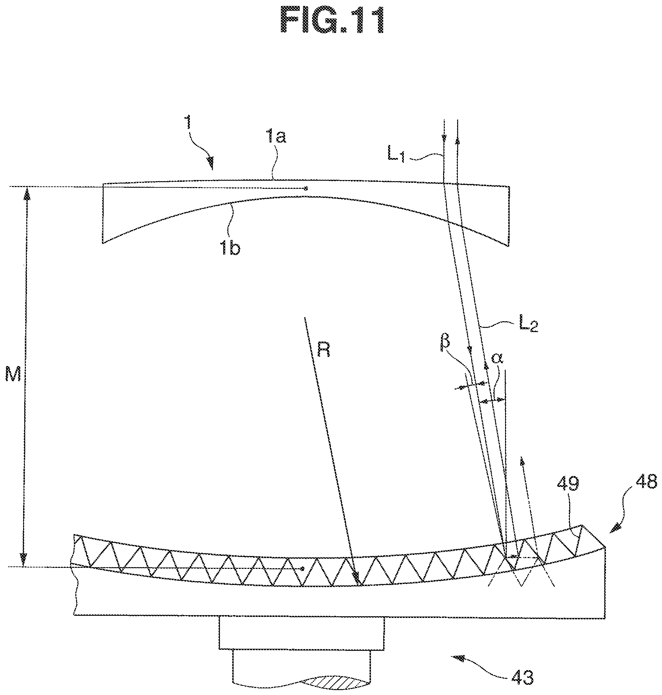

Fig. 11 is a sectional view showing a corner cube prism sheet according to the embodiment of the present invention.

In this embodiment, a corner cube prism sheet 48 is concavely curved on the light source side instead of being formed in a flat shape. Other constituent components in this embodiment are quite the same as the ones shown in Fig. 1.

Assume that the corner cube prism sheet 48 is formed in a flat shape, as indicated by an alternate long and two short dashed line. In this case, a light beam L₁ farther away from the center of a test lens 1 has a larger incident angle α on the surface of corner cube prisms 49. Thus, the corner cube prisms 49 exhibit low reflection efficiency. That is, a large light loss is generated, and this darkens the entire image. This means that a sharp image is hard to obtain when a mark is inscribed on the test lens 1 near its outer periphery.

To prevent this, the corner cube prism sheet 48 is concavely curved when viewed from the light source side. Then, the light beam L₁ farther away from the center of the test lens 1 can have an incident angle β on the surface of the corner cube prisms 49, that is smaller than when the corner cube prism sheet 48 is flat. Thus, the corner cube prisms 49 exhibit high reflection efficiency, and this makes it possible to reduce a light loss. In this way, a sharp image can be obtained even when a mark inscribed on the test lens 1 near its outer periphery is used.

If the corner cube prism sheet 48 has too large a radius of curvature R, it has a shape close to that of a flat plate, and this lessens the effect produced by the corner cube prism sheet 48. If the corner cube prism sheet 48 has too small a radius of curvature R, a light beam which passes through the test lens 1 near its periphery enters the corner cube prism sheet 48 at a relatively large incident angle, and this generates a light loss. Hence, the corner cube prism sheet 48 is desirably designed to have a preferable value of the radius of curvature R in accordance with the lens dioptric power. If the light beam L₁ which enters the convex surface la of the test lens 1 is a collimated light beam parallel to the optical axis, letting D (diopter) be the dioptric power of test lens 1, and M be the distance from the test lens 1 to the corner cube prism sheet 48, the radius of curvature R preferably has a value (R = (-1/D) + M) obtained by adding the distance M to the reciprocal of a negative value of the dioptric power D, or has its neighborhood. Note that if the light beam which enters the convex surface la of the test lens 1 is not collimated, the radius of curvature R can be set to a value obtained by adding a correction value that depends on the angle of divergence of the incident light beam to the radius of curvature R.

As has been described above, the light source used is a monochromatic point source.

Also, in the preferred embodiment of the present invention, the corner cube prism sheet is concavely curved when viewed from the light source side to reduce a light loss. That is, when the corner cube prism sheet is flat, light transmitted through the test lens at a position farther away from the center of the test lens more obliquely enters the corner cube prism. This generates a light loss due to factors associated with the prism geometrical structure, and lowers reflection efficiency (the intensity ratio between the incident beam and the outgoing beam). This phenomenon is undesirable because it generates a decrease in image luminance on the outer periphery of the test lens, which exhibits especially high divergence, and deteriorates the detection sensitivity of a mark located near the outer periphery.

To suppress the influence of the foregoing fact, the corner cube prism sheet is concavely curved when viewed from the light source side. Hence, a light beam which passes through a diverging test lens at a position farther away from its center can have an incident angle on the corner cube prisms, that is smaller than when a flat sheet is used. This makes it possible to keep a light loss small enough to be ignored, and, in turn, makes it possible to sense a sharp image of even a mark inscribed on the test lens near its outer periphery.

A converging test lens shows a decrease in luminance on its outer periphery less conspicuous than a diverging test lens. In addition, the former lens has a converging optical path from the test lens to the corner cube prism sheet. Thus, even when the corner cube prism sheet is concavely curved, the light beam effective range on the prism sheet is limited to the vicinity of the center of the prism sheet, and the prism sheet has a small tilt angle within the range. For this reason, a decrease in reflectance is kept small enough to be ignored as compared with a case in which the prism sheet has a flat surface.

If the corner cube prism sheet is undesirably convexly curved when viewed from the light source side, a light beam transmitted through the outer periphery of a diverging test lens enters the corner cube prisms at a large incident angle, and this generates a large light loss and lowers reflection efficiency. This makes it impossible to sense a sharp image of the mark.

Also, in the preferred embodiment of the present invention, the optical device includes a condenser lens, transmission rotary scattering plate, and half mirror. The condenser lens focuses light emitted by the light source. The transmission rotary scattering plate scatters the light transmitted through the condenser lens. The half mirror guides the light transmitted through the transmission rotary scattering plate to the collimator lens, and further guides, to the aperture stop, the light which is transmitted through the test lens, strikes and is reflected by the rotary reflector, is transmitted through the test lens and collimator lens again, and returns.

Also, in the preferred embodiment of the present invention, the image sensing device includes a bandpass filter which transmits only light in the wavelength range of the light from the light source.

Since the bandpass filter transmits only light in the wavelength range of the light from the light source, it is possible to sense an image with high contrast with little influence of ambient light.

Moreover, in the preferred embodiment of the present invention, the image sensing device includes an image processing device which processes the image sensed by the image sensing device.

## Claims

1. A lens image sensing apparatus (30) comprising:
a light source (31);
an optical device (32) including a collimator lens which is configured to convert light emitted by said light source (31) into collimated light, and to guide the collimated light to a convex surface of a test lens;
a rotary reflector (43) configured to reflect the light transmitted through the test lens back to the test lens;
an image sensing device (40) configured to receive back 11 the light that is reflected by said rotary reflector (43) and transmitted through the test lens and said collimator lens;
an aperture stop (37) arranged in an optical path between said collimator lens and said image sensing device (40); and
a re-imaging lens (39) provided between said aperture stop (37) and said image sensing device (40),
said rotary reflector (43) including a sheet formed from a plurality of corner cube prisms,
**characterized in that** said sheet is concavely curved when viewed from a side of said light source (31) .

2. A lens image sensing apparatus (30) according to claim 1, wherein said light source (31) includes a monochromatic point source.

3. A lens image sensing apparatus (30) according to claim 1, wherein said optical device (32) further comprises a condenser lens which focuses light emitted by said light source (31), a transmission rotary scattering plate which scatters the light transmitted through said condenser lens, and a half mirror which guides the light transmitted through said transmission rotary scattering plate to said collimator lens, and guides, to said aperture stop (37), the light that is transmitted through the test lens and said collimator lens again and returns.

4. A lens image sensing apparatus (30) according to claim 1, wherein said image sensing device (40) comprises a bandpass filter which transmits only light in a wavelength range of the light from said light source (31).

5. A lens image sensing apparatus (30) according to claim 1, further comprising an image processing device which processes the image sensed by said image sensing device (40).

## Patentansprüche

1. Linsenbildaufnahmegerät (30), umfassend:
eine Lichtquelle (31);
eine optische Vorrichtung (32), umfassend eine Kollimatorlinse, die dazu ausgelegt ist, Licht, welches durch die Lichtquelle (31) emittiert ist, in kollimiertes Licht umzuwandeln, und das kollimierte Licht zu einer konvexen Oberfläche einer Testlinse zu führen;
einen Drehreflektor (43), der dazu ausgelegt ist, das durch die Testlinse transmittierte Licht zurück zu der Testlinse zu reflektieren;
eine Bildaufnahmevorrichtung (40), die dazu ausgelegt ist, das Licht wieder zu empfangen, das durch den Drehreflektor (43) reflektiert und durch die Testlinse und die Kollimatorlinse transmittiert ist;
einen Aperturstopp (37), der in einem optischen Pfad zwischen der Kollimatorlinse und der Bildaufnahmevorrichtung (40) angeordnet ist; und
eine Abbildungslinse (39), die zwischen dem Aperturstopp (37) und der Bildaufnahmevorrichtung (40) vorgesehen ist,
wobei der Drehreflektor (43) eine Schicht umfasst, die aus einer Mehrzahl von Tripelspiegelprismen gebildet ist,
**dadurch gekennzeichnet, dass** die Schicht bei Betrachtung von einer Seite der Lichtquelle (31) konkav gekrümmt ist.

2. Linsenbildaufnahmegerät (30) nach Anspruch 1, wobei die Lichtquelle (31) eine monochromatische Punktquelle enthält.

3. Linsenbildaufnahmegerät (30) nach Anspruch 1, wobei die optische Vorrichtung (32) ferner eine Kondensorlinse umfasst, die Licht fokussiert, das durch die Lichtquelle (31) emittiert ist, eine Transmissionsdrehstreuplatte, die das durch die Kondensorlinse transmittierte Licht streut, und einen Halbspiegel, der das durch die Transmissionsdrehstreuplatte transmittierte Licht zu der Kollimatorlinse führt, und das Licht, das durch die Testlinse und die Kollimatorlinse wieder transmittiert ist und zurückkehrt zu dem Aperturstopp (37) führt.

4. Linsenbildaufnahmegerät (30) nach Anspruch 1, wobei die Bildaufnahmevorrichtung (40) ein Bandpassfilter umfasst, das nur Licht in einem Wellenlängenbereich des Lichts von der Lichtquelle (31) transmittiert.

5. Linsenbildaufnahmegerät (30) nach Anspruch 1, ferner umfassend eine Bildverarbeitungsvorrichtung, die das von der Bildaufnahmevorrichtung (40) aufgenommene Bild verarbeitet.

## Revendications

1. Appareil de détection d'image de lentille (30) comprenant :
une source lumineuse (31) ;
un dispositif optique (32) comprenant une lentille de collimation qui est configurée pour convertir une lumière émise par ladite source lumineuse (31) en lumière collimatée, et pour guider la lumière collimatée jusqu'à une surface convexe d'une lentille de test ;
un réflecteur rotatif (43) configuré pour réfléchir la lumière transmise par l'intermédiaire de la lentille de test jusqu'à la lentille de test ;
un dispositif de détection d'image (40) configuré pour recevoir la lumière qui est réfléchie par ledit réflecteur rotatif (43) et transmise par l'intermédiaire de la lentille de test et de ladite lentille de collimation ;
une butée d'ouverture (37) agencée dans une voie optique entre ladite lentille de collimation et ledit dispositif de détection d'image (40) ; et
une lentille de re-imagerie (39) prévue entre ladite butée d'ouverture (37) et ledit dispositif de détection d'image (40),
ledit réflecteur rotatif (43) comprenant une feuille formée à partir d'une pluralité de prismes de cube de coin,
**caractérisé en ce que** ladite feuille est incurvée de manière concave dans une vue depuis un côté de ladite source lumineuse (31).

2. Appareil de détection d'image de lentille (30) selon la revendication 1, dans lequel ladite source lumineuse (31) comprend une source de point monochromatique.

3. Appareil de détection d'image de lentille (30) selon la revendication 1, dans lequel ledit dispositif optique (32) comprend en outre une lentille de condensation qui focalise une lumière émise par ladite source lumineuse (31), une plaque de diffusion rotative de transmission qui diffuse la lumière transmise par l'intermédiaire de ladite lentille de condensation, et un demi-miroir qui guide la lumière transmise par l'intermédiaire de ladite plaque de diffusion rotative de transmission jusqu'à ladite lentille de collimation, et qui guide, jusqu'à ladite butée d'ouverture (37), la lumière qui est transmise par l'intermédiaire de la lentille de test et de ladite lentille de collimation à nouveau et qui retourne.

4. Appareil de détection d'image de lentille (30) selon la revendication 1, dans lequel ledit dispositif de détection d'image (40) comprend un filtre passe-bande qui transmet uniquement une lumière dans une plage de longueurs d'onde de la lumière provenant de ladite source lumineuse (31).

5. Appareil de détection d'image de lentille (30) selon la revendication 1, comprenant en outre un dispositif de traitement d'image qui traite l'image détectée par ledit dispositif de détection d'image (40).
